(19) Europäisches Patentamt / European Patent Office / Office européen des brevets

(11) **EP 3 813 007 A1**

(12) **EUROPEAN PATENT APPLICATION**
published in accordance with Art. 153(4) EPC

(43) Date of publication:
**28.04.2021 Bulletin 2021/17**

(51) Int Cl.:
***G06Q 50/10*** (2012.01)

(21) Application number: **18924212.6**

(22) Date of filing: **25.06.2018**

(86) International application number:
**PCT/JP2018/024042**

(87) International publication number:
**WO 2020/003355 (02.01.2020 Gazette 2020/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Forum Engineering Inc.**
**Tokyo, 105-0001 (JP)**

(72) Inventor: **TAKEUCHI, Masahiro**
**Tokyo 105-0001 (JP)**

(74) Representative: **J A Kemp LLP**
**14 South Square**
**Gray's Inn**
**London WC1R 5JJ (GB)**

(54) **MATCHING SCORE CALCULATION DEVICE**

(57) The present disclosure relates to a device for calculating a matching score that can be used for recruitment, staffing, and evaluation of a human resource, and the purpose thereof is to calculate a matching score with high accuracy by a simple process while a relevance between items is also taken into consideration. A matching dictionary having a tree structure is stored. A dictionary node required for a human resource in the matching dictionary is registered as a desire node 84. A technical tree 80 is generated by applying the desire node 84 to the tree structure. A dictionary node possessed by a human resource candidate in the matching dictionary is registered as a possession node 86. A skill tree 82 is generated by applying the possession node 86 to the tree structure. A matching score is calculated based on whether or not each of the desire nodes 84 included in the technical tree 80 matches each of the possession nodes 86 included in the skill tree 82, and whether or not a relevance in the tree structure is recognized between the two.

Fig. 12

## Description

### Technical Field

The present disclosure relates to a matching score calculation device, and more particularly to a matching score calculation device suitable as a device for calculating a matching score that can be used for recruitment, staffing, and evaluation of a human resource.

### Background Art

Patent Document 1 (JP 2003-162651 A) discloses a human resource matching device for calculating a matching score between a requirement on the side of a job offerer and a skill on the side of a job seeker based on a degree of matching between job offering information and job seeking information. In Patent Document 1, job offering information is provided by a job offering company that seeks human resources. On the other hand, job seeking information is provided by a job seeking company that can provide a variety of human resources.

The job offering information includes, for example, items such as an industry type, as well as an operating system (OS), a development language, a database (DB), and a development process to be used in the work. On the other hand, the job seeking information includes items such as a job type, an OS, a development language, a DB, and a development process for each computer-related job history of the job seeker.

In calculating a matching score, the device described in Patent Document 1 performs various natural language processing such as text mining on information included in the job seeking information and extracts an image of the job seeker. For example, for a job seeker having many qualifications, hobbies, and jobs in the past, an image of a person of being highly proactive and full of challenging spirit is extracted.

On the other hand, the above device converts each condition included in the job offering information into keywords, and allocates a score to each condition based on its importance level. For example, the condition "proactiveness" included in the job information is converted into a keyword, and a score according to the importance level is allocated to the keyword. Next, the contents related to "proactiveness" are extracted from the image of the job seeker, and a score based on the results is calculated. Then, the total score thus calculated is used as a matching score between the job offering company and the job seeker.

### Prior Art Documents

#### Patent Document

[Patent Document 1] JP 2003-162651 A

### Disclosure of the Invention

#### Problem to be Solved by the Invention

According to the method described in Patent Document 1, it is possible to appropriately quantify affinity between the requirement of the job offering company and the skill of each job seeker. However, in the above conventional method, job offering information and job seeking information are provided in different formats. Then, various natural language processing and the like are introduced to compare the two. In order to perform the various natural language processing, extensive data and extensive processing are required. In addition, this type of natural language processing involves certain errors. For this reason, the above conventional method requires complicated processing and has a characteristic that tends to superimpose certain errors on the matching score.

In addition, in the above conventional method, if a keyword included in the job offering information is not extracted from the image of the job seeker, the score for that keyword is zero. Specifically, if the job offering information requires a skill related to, for example, "automobile engine components", the score for this item will be zero unless the skill is extracted from the information on the job seeker.

However, a job seeker who has a skill related to, for example, "automobile axles/brakes" usually has a basic knowledge of "automobiles". For this reason, in order to quantify the ability of a job seeker by the matching score, it is appropriate to reflect, even slightly, an experience of designing "automobile axles/brakes" to the score of "automotive engine components". In this regard, the above conventional method that does not consider the relevance between the items leaves room for further improvement in increasing the accuracy of calculating a matching score.

The present disclosure has been made to solve the problem as described above, and the object thereof is to provide a matching score calculation device capable of calculating a matching score between elements required for a human resource and elements possessed by the human resource with high accuracy by a simple process while a relevance between items is also taken into consideration.

**Means for Solving the Problem**

To achieve the above mentioned purpose, a first aspect of the present disclosure is a matching score calculation device, comprising:

a memory unit for storing a matching dictionary which has a tree structure including a plurality of dictionary nodes hierarchized in terms of at least one type of relationship from among a superordinate-subordinate relationship of product categories, a relationship between a whole and a part of a product, and a superordinate-subordinate relationship of an abstract concept, and in which a matching element is allocated to each dictionary node;
an input interface for receiving an input of a dictionary node to be registered; and
a processing device for calculating a matching score based on the matching dictionary and the registered dictionary node, wherein
the processing device performs:

a process of registering a dictionary node in the matching dictionary as a desire node, said dictionary node being required for a human resource;
a process of applying the desire node to the tree structure to generate a technical tree that covers the registered desire node;
a process of registering a dictionary node in the matching dictionary as a possession node, said dictionary node being possessed by a human resource candidate;
a process of applying the possession node to the tree structure to generate a skill tree that covers the registered possession node; and
a process of calculating the matching score based on whether or not each of the desire nodes included in the technical tree matches each of the possession nodes included in the skill tree, and whether or not a relevance in the tree structure is recognized between the two.

A second aspect of the present disclosure is the matching score calculation device according to the first aspect, wherein:

the matching dictionary further includes information indicating at least one type of horizontal relationship among a horizontal relationship that associates one matching element with another matching element that is used to handle said one matching element, a horizontal relationship that associates one matching element with another matching element that is required to handle said one matching element, and a horizontal relationship that associates one matching element with another matching element that is similar to said one matching element; and
the process of calculating the matching score includes a process of reflecting in the matching score whether or not the horizontal relationship is recognized between each of the desire nodes included in the technical tree and each of the possession nodes included in the skill tree.

A third aspect of the present disclosure is the matching score calculation device according to the first or second aspect, wherein:

the input interface has a function of receiving an input of an importance level of the desire node; and
the process of calculating the matching score includes:

a process of calculating an allocated point for each of the desire nodes included in the technical tree based on the importance level;
a process of calculating a score for each of the desire nodes based on the allocated point; and,
a process of setting a sum of the scores of the respective desire nodes as the matching score.

A fourth aspect of the present disclosure is the matching score calculation device according to any one of the first to third aspects, wherein
the input interface has a function of receiving an input of a masterly level of the possession node, and
the process of calculating the matching score includes a process of reflecting in the matching score the masterly level of each of the possession nodes included in the skill tree.
A fifth aspect of the present disclosure is the matching score calculation device according to any one of the first to fourth aspects, wherein
the desire node corresponds to each element included in a job offer condition required for a human resource to be recruited, the possession node corresponds to each element possessed by a human resource candidate who seeks a job, and the matching score corresponds to a degree of matching between the job offer condition and the human resource candidate.

A sixth aspect of the present disclosure is the matching score calculation device according to the fifth aspect, wherein

the processing device repeatedly performs a process of calculating a matching score so that the matching score with each of a plurality of human resource candidates is calculated for one job offer condition, and further performs:

a process of sorting a plurality of calculated matching scores in order of the score; and
a process of outputting information on one or more human resource candidates in order of the score from the highest matching score.

A seventh aspect of the present disclosure is the matching score calculation device according to the fifth aspect, wherein

the processing device repeatedly performs a process of calculating a matching score so that the matching score with each of a plurality of job offer conditions is calculated for one human resource candidate, and further performs:

a process of sorting a plurality of calculated matching scores in order of the score; and
a process of outputting information on one or more job offer conditions in order of the score from the highest matching score.

A eighth aspect of the present disclosure is the matching score calculation device according to any one of the first to fourth aspects, wherein

the desire node corresponds to each element included in an ability requirement required for a human resource to be replenished,
the possession node corresponds to each element possessed by a human resource candidate who is a staff candidate, and
the matching score corresponds to a degree of matching between the ability requirement and the human resource candidate.

A ninth aspect of the present disclosure is the matching score calculation device according to the eighth aspect, wherein

the processing device repeatedly performs a process of calculating a matching score so that the matching score with each of a plurality of human resource candidates is calculated for one ability requirement, and further performs:

a process of sorting a plurality of calculated matching scores in order of the score; and
a process of outputting information on one or more human resource candidates in order of the score from the highest matching score.

A tenth aspect of the present disclosure is the matching score calculation device according to the eighth aspect, wherein

the processing device repeatedly performs a process of calculating a matching score so that the matching score with each of a plurality of ability requirements is calculated for one human resource candidate, and further performs:

a process of sorting a plurality of calculated matching scores in order of the score; and
a process of outputting information on one or more ability conditions in order of the score from the highest matching score.

Ae eleventh aspect of the present disclosure is the matching score calculation device according to any one of the first to fourth aspect, wherein

the desire node corresponds to each element included in evaluation criteria to be applied to a human resource to be evaluated,
the possession node corresponds to each element possessed by the human resource whose performance should be evaluated, and
the matching score corresponds to an evaluation result of the human resource to be evaluated.

**Advantages of the Aspect of the Disclosure**

According to the first aspect of the disclosure, a technical tree that covers elements required for a human resource can be generated by registering all desire nodes in a matching dictionary. In addition, a skill tree that covers items possessed by a human resource candidate can be generated by registering all possession nodes in the matching dictionary. Since the technical tree and the skill tree have exactly the same tree structure, whether or not a possession node that matches each of the desire nodes exists can be determined easily and accurately. Similarly, whether or not a relevance in the tree structure is recognized can also be determined easily and accurately. For this reason, according to the present aspect, it is possible to calculate a matching score between an item required for a human resource and an item possessed by the human resource with high accuracy by a simple process, while considering the relevance between items as well.

According to the second aspect of the disclosure, at least one information of a horizontal relationship associated by "use", a horizontal relationship associated by "require", and a horizontal relationship associated by "similar" is provided to the matching dictionary. Matching elements associated by these horizontal relationships can be understood as elements in which one complements the other. For this reason, even when a possession node that matches the desire node does not exist, it is desirable to give a certain score to the desire node as long as the possession node indicating a horizontal relationship exists. According to the present aspect, it is possible to satisfy this requirement because whether or not the above horizontal relationship is recognized between each of the desire nodes included in the technical tree and each of the possession nodes included in the skill tree.

According to the third aspect of the disclosure, for each of the desire nodes included in the technical tree, an allocated point is given according to each importance level. For this reason, according to the present aspect, it is possible that a high matching score can be easily calculated for a human resource candidate that satisfies a desire node having a high importance level. Therefore, according to the present aspect, it is possible to give a higher matching score to a more appropriate human resource candidate.

According to the fourth aspect of the disclosure, a masterly level of each possession node can be reflected in the matching score. For this reason, according to the present aspect, it is possible to make a high matching score easily calculated for a human resource candidate having a higher masterly level of a desire node. Therefore, according to the present aspect, it is possible to give a higher matching score to a more appropriate human resource candidate.

According to the fifth aspect of the disclosure, it is possible to calculate a matching score that appropriately indicates a degree of matching between a job offer condition in seeking recruitment of a human resource and a human resource candidate who seeks a job.

According to the sixth aspect of the disclosure, it is possible to output information on one or more human resource candidates for one job offer condition in order of the score from the highest matching score. For this reason, according to the present aspect, a person who desires to recruit a human resource can extremely easily select a human resource candidate to be recruited based on the output.

According to the seventh aspect of the disclosure, it is possible to output information on one or more job offer conditions for one human resource candidate in order of the score from the highest matching score. For this reason, according to the present aspect, a human resource candidate who seeks a job can extremely easily select a place of employment that is the most appropriate for himself or herself based on the output.

According to the eighth aspect of the disclosure, it is possible to calculate a matching score that appropriately indicates a degree of matching between an ability requirement required for a human resource to be replenished and a human resource candidate who is a candidate for staffing.

According to the ninth aspect of the disclosure, it is possible to output information on one or more human resource candidates for one ability requirement in order of the score from the highest matching score. For this reason, according to the present aspect, a department that desires to replenish a human resource can extremely easily select the most appropriate human resource candidate from among the candidates based on the output.

According to the tenth aspect of the disclosure, it is possible to output information on one or more ability requirements for one human resource candidate in order of the score from the highest matching score. For this reason, according to the present aspect, a target person who seeks a destination to be assigned can extremely easily select the destination that is most appropriate for himself/herself based on the output.

According to the eleventh aspect of the disclosure, by calculating a matching score between the possession node of the human resource to be evaluated and the evaluation criteria, it is possible to obtain an evaluation result that accurately indicates how much the human resource satisfies the evaluation criteria.

**Brief Description of the Drawings**

Fig. 1 is a diagram for describing an overview of a network including a matching score calculation device of a first embodiment of the present disclosure;

Fig. 2 is a diagram showing a hardware configuration of the management server shown in Fig. 1;

Fig. 3 is a diagram showing an example of a matching dictionary including a group of matching items, organized in a tree structure according to their skill relevance;

Fig. 4 is a diagram showing a use relationship and a require relationships included in the matching dictionary employed in the present embodiment;

Fig. 5 is a diagram showing a similar relationship included in the matching dictionary employed in the present embodiment;

Fig. 6 is a flowchart for describing a flow for registering dictionary nodes which is necessary to produce a technical tree which a job offer condition is reflected to;

Fig. 7 is a first diagram showing procedures for registering dictionary nodes corresponding to the job offer condition;

Fig. 8 is a second diagram showing procedures for registering dictionary nodes corresponding to the job offer condition;

Fig. 9 is a third diagram showing procedures for registering dictionary nodes corresponding to the job offer condition;

Fig. 10 is a diagram showing a state in which a dictionary node corresponding to a job offer condition does not exist in a matching dictionary;

Fig. 11 is a diagram showing procedures for registering the importance of a dictionary node corresponding to the job offer condition;

Fig. 12 is a diagram showing how a matching score is calculated based on a matching result between a technical tree which a job offer condition is reflected to and a skill tree which information of job seeker is reflected to;

Fig. 13 is a flowchart for describing a flow performed by the management server for ranking job seekers in order of their matching scores with regards to a specific recruit case in first embodiment of the present discloser;

Fig. 14 is a flowchart for describing a flow performed by a management server for ranking candidates for staffing in order of their matching scores with regards to a staffing for a specific department in second embodiment of the present disclosure;

Fig. 15 is a flowchart for describing a flow performed by a management server for ranking job offer cases in order of their matching scores with regards to a specific job seeker in third embodiment of the present disclosure;

Fig. 16 is a flowchart for describing a flow performed by a management server for ranking departments to be assigned in order of their matching scores with regards to a specific staff candidate in fourth embodiment of the present disclosure; and

Fig. 17 is a flowchart for describing a flow performed by a management server for calculating an evaluation score of an appraise based on an evaluation criteria in fifth embodiment of the present disclosure.

## Description of Embodiments

### First embodiment

[Configuration of first embodiment]

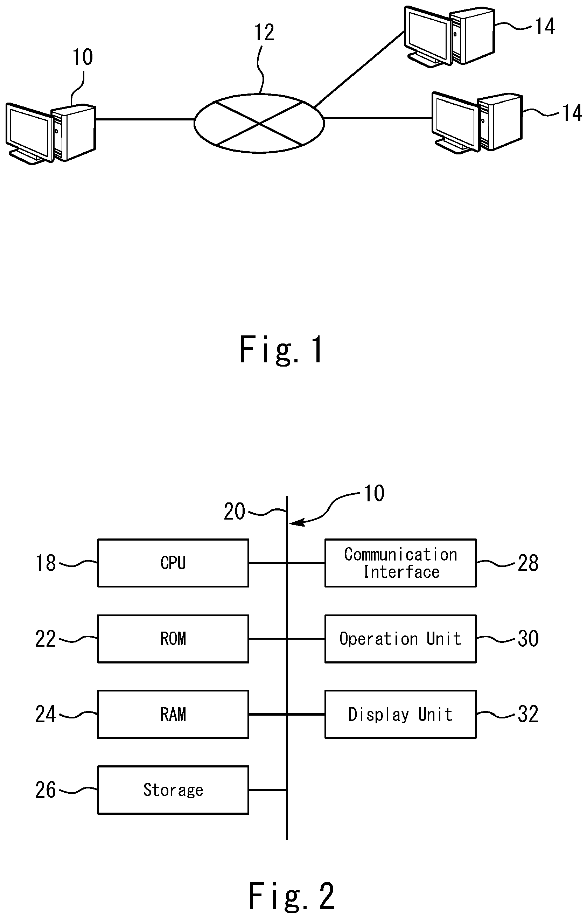

Fig. 1 is a diagram for describing an overview of a network including a matching score calculation device of a first embodiment of the present disclosure. The matching score calculation device of the present embodiment includes a management server 10.

Fig. 2 shows a hardware configuration of the management server 10. The management server 10 is configured with a general computer system and includes a central processor (CPU) 18. Memory units such as a ROM 22, a RAM 24, and a storage 26 are connected to the CPU 18 via a communication bus 20. A communication interface 28, and an operation unit 30 and a display unit 32 serving as user interfaces are further connected to the communication bus 20. The management server 10 implements a function as a matching score calculation device when the CPU 18 executes a program stored in the ROM 22.

The management server 10 is connected to a plurality of operation terminals 14 via a network 12. The device of the present embodiment is designed mainly for the purpose of calculating a matching score representing a degree of matching between a company that desires to recruit a human resource and a human resource candidate who desires to be employed. The operation terminal 14 is used when a person in charge of operation who is proficient in the operation of the present device registers a job offer condition provided by a person in charge in the company and also registers information such as a career and a personal history provided by the job seeker. The operation terminal 14 is configured with a general computer system as in the management server 10.

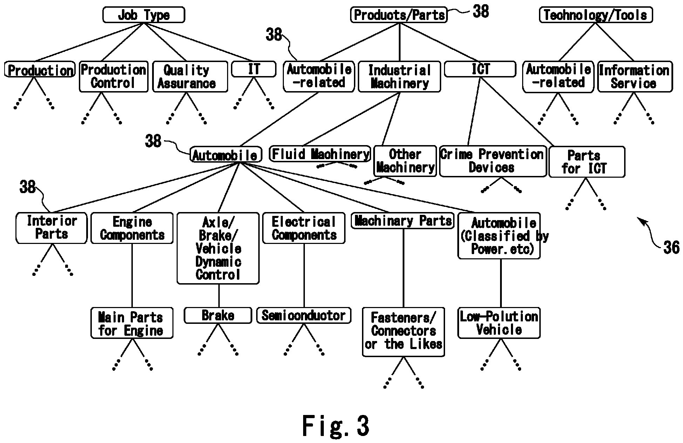

Fig. 3 shows an example of a matching dictionary 36 stored in the management server 10. The matching dictionary 36 includes a plurality of dictionary nodes 38 hierarchized in a tree structure. Each of the dictionary nodes 38A is allocated with a matching element representing the content or the field of the skill. The dictionary nodes associated by the upper and lower relationship lines show a relationship between a superordinate and a subordinate in product categories, a relationship between the whole and a part of a product, or a relationship between a superordinate and a subordinate in abstract concepts.

For example, the dictionary node 38 of "Products/Parts" is associated with several dictionary nodes 38 of products or parts including "Automobile-related". They have a relationship between a superordinate and a subordinate in product categories. In addition, the dictionary node 38 of "Automobile-related" is associated with several dictionary nodes 38 including "Interior Parts". They have a relationship between the whole and a part of a product. Further, the dictionary node 38 of "Job Type" is associated with several dictionary nodes 38 including "Pproduction". They have a relationship between a superordinate and a subordinate in the abstract concept.

The dictionary nodes 38 included in the matching dictionary 36 can be determined to have a stronger association as their distance in the tree structure is shorter. For example, "Engine Components" and "Axle/Brake/Vehicle Dynamic Control", both of which are subordinate to "Automobile", are closely related because they are overlapping in knowledge of automobiles.

On the other hand, some of the dictionary nodes 38 are closely related to each other even if they are located apart from each other in the tree structure. The matching dictionary 36 includes three types of horizontal relationship lines that represent their relationships.

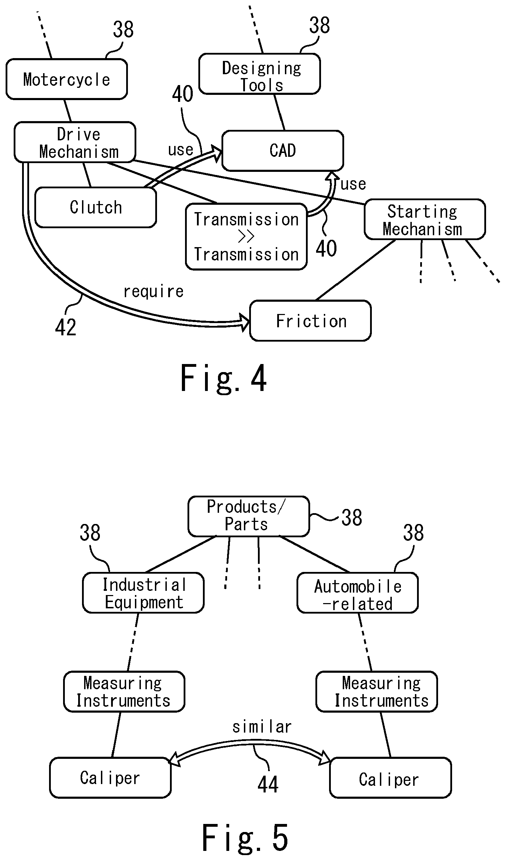

Fig. 4 shows a use relationship line 40 and a require relationship line 42 among the three types of horizontal relationship lines. Of the dictionary nodes 38 shown in Fig. 4, for example, use of a "CAD" is required to handle a "Clutch" in a "Drive Mechanism" of a "Motorcycle". In this manner, when a relationship in which one element uses another element is established, the use relationship line 40 is drawn from the one element to the other element. In addition, academic knowledge of "Friction" is required to handle the "Drive Mechanism" of the "Motorcycle". In this manner, when a relationship in which one element requires another element is established, the require relationship line 42 is drawn from the one element to the other element.

Fig. 5 shows a third horizontal relationship line, that is, a similar relationship line 44. In Fig. 5, a "Caliper" that is subordinate to "Industrial Equipment" and a "Caliper" that is subordinate to "Automobile-related" have substantially the same meaning from a viewpoint of a skill. In this manner, when one element and another element have substantially the same meaning, the similar relationship line 44 is drawn between these elements.

As described above, the matching dictionary 36 of the present embodiment includes three types of horizontal relationship lines 40, 42, and 44 in addition to vertical relationship lines that correspond to the tree structure. As in the dictionary nodes 38 arranged close to each other in the tree structure, the dictionary nodes connected by any one of these horizontal relationship lines 40, 42, and 44 can be considered to have a strong association therebetween.

In the present embodiment, each dictionary node 38 included in the matching dictionary 36 is input by an administrator using the management server 10. At this time, the administrator inputs the dictionary node 38 to be added while specifying a vertical relationship constituting the tree structure, and if necessary, specifying a horizontal relationship.

[Basic operation of first embodiment]

Next, an operation of the matching score calculation device of the present embodiment will be described.

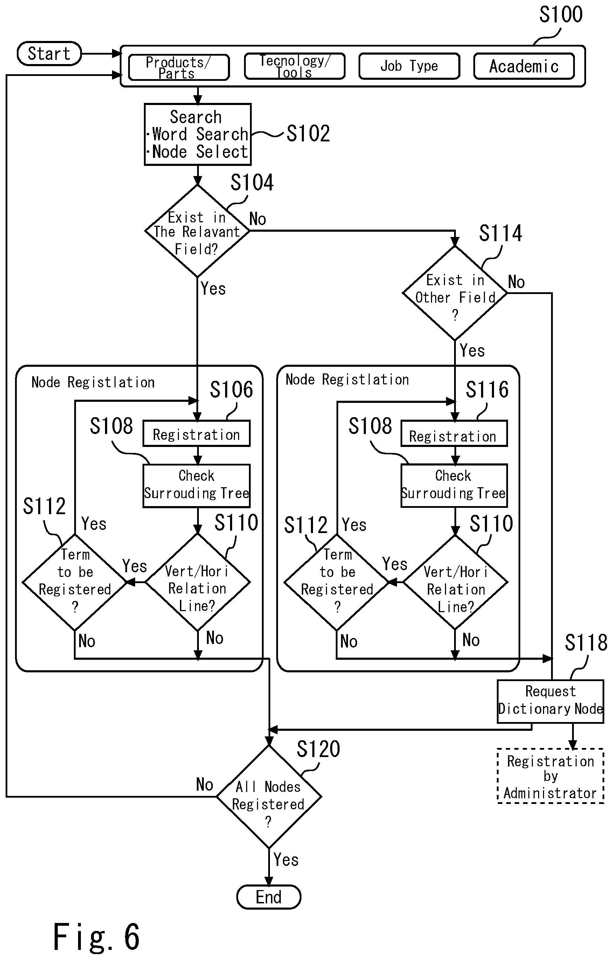

Fig. 6 is a flowchart for describing a flow according to which a person in charge of operation who uses the operation terminal 14 registers a job offer condition provided by a person in charge in the company. The matching dictionary used in the present embodiment has a tree structure for each of four categories, "Products/Parts", "Technology/Tools", "Job Type", and "Academic". When a job offer condition is registered, which one of these four categories is to be registered is first selected.

Hereinafter, an example of a case in which recruitment of an engineer who can handle "Design of Actuators for Small Outboard Motors" is requested by a company that manufactures parts for ships. In this case, since the job type has been specified, a dictionary node is first registered in the category of "job type" (Step 100).

In the present embodiment, as a method to register the dictionary node, two methods, word search and node selection, can be used (Step 102). The word search is a method of inputting a specific word for calling an appropriate dictionary node. On the other hand, the node selection is a method of checking a matching dictionary along a tree structure, and selecting and registering a dictionary node required for a human resource.

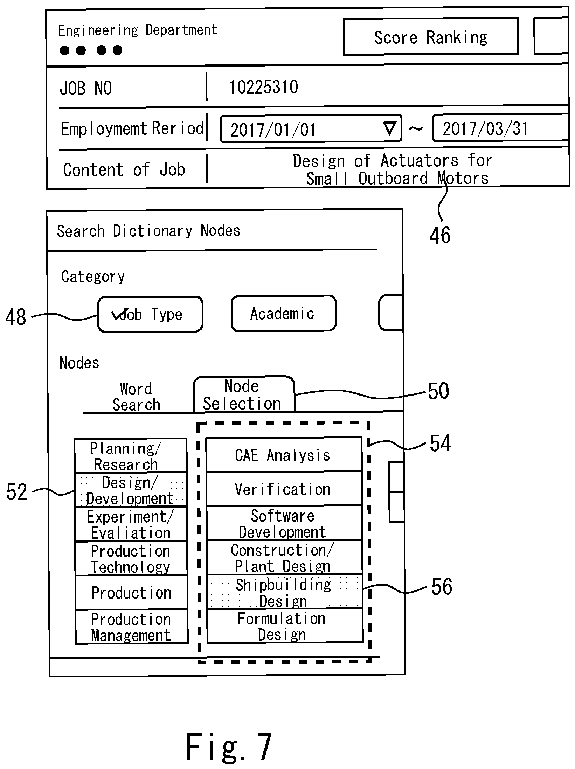

Fig. 7 shows an example of a screen displayed on a monitor of the operation terminal 14 when a dictionary node is registered by the node selection method. Here, "Design of Actuators for Small Outboard Motors" is input as a content of job (46), "Job Type" is selected as a category (48), and a tab of "Node Selection" is selected (50) by the person in charge of operation. Several job types from "Planning/Research" to "Production Management" are listed below "Job Type", and the dictionary node of "Design/Development" is selected from among them (52).

When "Design/Development" is selected, several dictionary nodes that are subordinate to "Design/Development" are displayed. Here, these dictionary nodes are shown in a frame indicated by a broken line with a reference number (54). The person in charge of operation shows these dictionary nodes to the person in charge of recruitment in the company and asks the person to choose the one closest to the job offer condition of the present case. Fig. 7 shows a state in which "Shipbuilding Design" is chosen as the closest one and the node thereof is registered (56).

The flowchart shown in Fig. 6 represents the above processing in Step 104 and Step 106. Specifically, the process of searching for a dictionary node that matches the job offer condition in the field of "Design/Development" corresponds to Step 104, and the process of registering the dictionary node of "Shipbuilding Design" as a result of it corresponds to Step 106.

In the flowchart shown in Fig. 6, following Step 106, checking of surrounding trees (Step 108), determination of the presence/absence of a vertical/horizontal relationship line (Step 110), and determination of a term to be registered (Step 112) are shown. Since these processes are substantially the same as the case of registering a node by the word search that will be described later, the description thereof is omitted here.

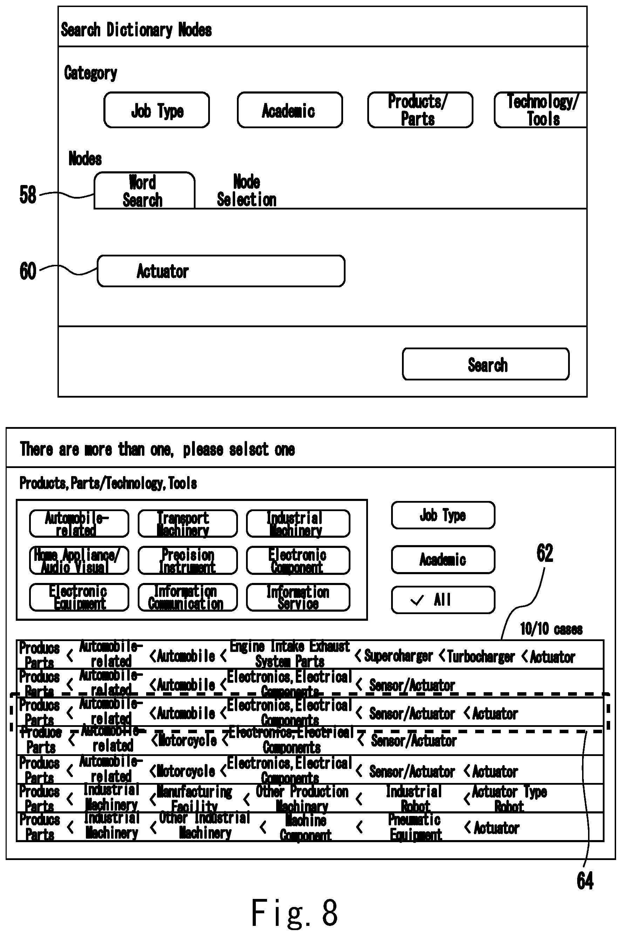

Fig. 8 shows an example of a screen displayed on the monitor of the operation terminal 14 when a dictionary node is registered by the word search method. Here, a case will be described in which product knowledge of "Actuator" is required by the person in charge in the company as a skill necessary for "Design of Actuators for Small Outboard Motors".

In the upper part of Fig. 8, a tab of "Word Search" is selected as a method of dictionary node search (58). Then, "Actuator" is input as a word to be searched (60).

The lower part of Fig. 8 shows a search result (62) of "Actuator". Here, specifically, seven results are shown from "Products/Parts" < "Automobile-related" < "Automobile" < "Engine Intake Exhaust System Parts" < "Supercharger" < "Turbocharger" < "Actuator" to "Products/Parts" < "Industrial Machinery" < "Other Industrial Machinery" < "Machine Component" < "Pneumatic Device" < "Actuator".

The above results show that the dictionary node of "Actuator" is not prepared in the field of ships, but is prepared in other fields. In this case, the person in charge of operation inquires the person in charge of recruitment in the company whether there is any of the obtained results that can be used for the job offer of the present case. If an answer is received as a result, for example, that "Actuator" in the field of "Automobile" (64) can be used because "Actuator" has a multitude of knowledge in common, a dictionary node corresponding to this is registered.

The flowchart shown in Fig. 6 represents the above processing in Steps 104, Step 114, and Step 116. Specifically, the process of determining whether or not a dictionary node corresponding to "Actuator" in the "Ship" field in the results of the keyword search (62) corresponds to Step 104. In addition, when the determination is negative, the process of determining whether or not an available dictionary node exists in another field corresponds to Step 114. Then, the process of registering "Actuator" in the "Automobile" field corresponds to Step 116.

In the flowchart shown in Fig. 6, below Step 116 as well, as in the case of Step 106 described above, checking of surrounding trees (Step 108), determination of the presence/absence of a vertical/horizontal relationship line (Step 110), and determination of a term to be registered (Step 112) are shown.

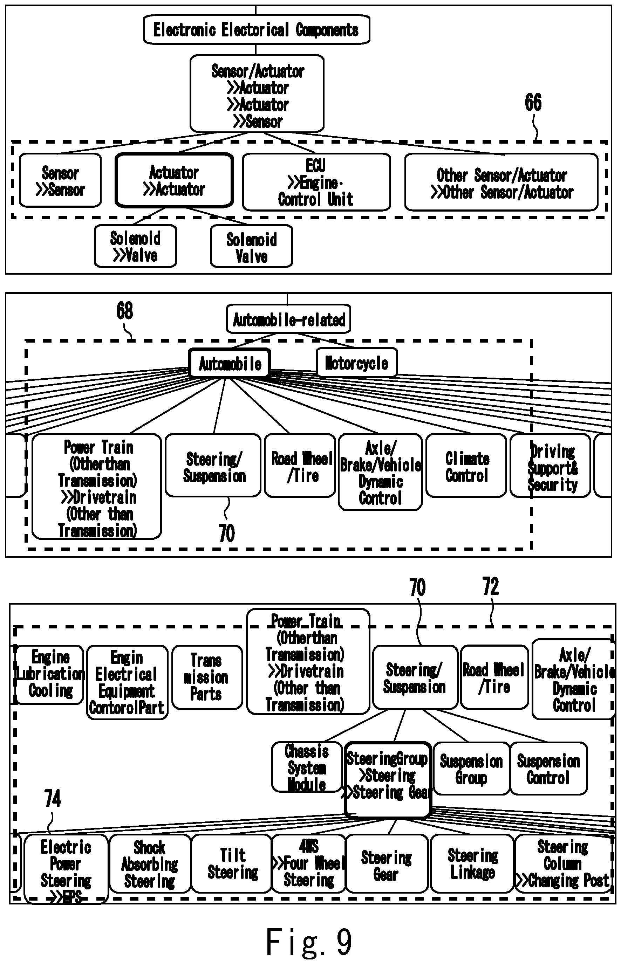

Fig. 9 shows an example of a screen displayed on the monitor of the operation terminal 14 in accordance with the processing of Steps 108 to 112. More specifically, the upper part of Fig. 9 shows the surrounding trees that the person in charge of operation displayed on the screen after registering the above "Actuator". The person in charge of operation shows this screen to the person in charge of recruitment in the company to confirm whether or not a useful node exists in the dictionary nodes (66) arranged along with "Actuator" below "Sensor/Actuator".

If a useful dictionary node is found among the dictionary nodes (66), the node is registered. In addition, if there is no useful node among them, the person in charge of operation may display surrounding dictionary nodes in a further wider range. The middle part of Fig. 9 shows an example in which dictionary nodes (68) arranged below "Automobile" are displayed on the screen after moving further to a superordinate side.

The person in charge of operation confirms the usefulness of the dictionary node (68) with the person in charge of recruitment. As a result, for example, when the usefulness of "Steering" (70) is recognized, the dictionary nodes (72) below the "Steering" may be expanded further so as to confirm whether or not there is any necessary skill. The lower part of Fig. 9 shows an example in which dictionary nodes (72) extending below "Steering" are displayed. Then, for example, if it is found that knowledge of "Electric Power Steering" (74) is necessary, the dictionary node thereof (74) is registered.

It should be noted that the surrounding trees are expanded by tracing only the vertical relationship lines in the above example, but the method of the expansion is not limited to this. For example, when a horizontal relationship line is linked to the registered dictionary node, the surrounding tree may be expanded by tracing the horizontal relationship line.

During the above processing, the act of displaying the upper, middle, or lower screen of Fig. 9 and the act of finding dictionary nodes (66), (68), or (72) linked by the vertical and/or horizontal relationship lines on the screen correspond to the processing of Step 108 and Step 110 in the flowchart shown in Fig. 6. In addition, the act of finding a term to be registered from the dictionary nodes (66), (68), and (72) corresponds to the processing of Step 112.

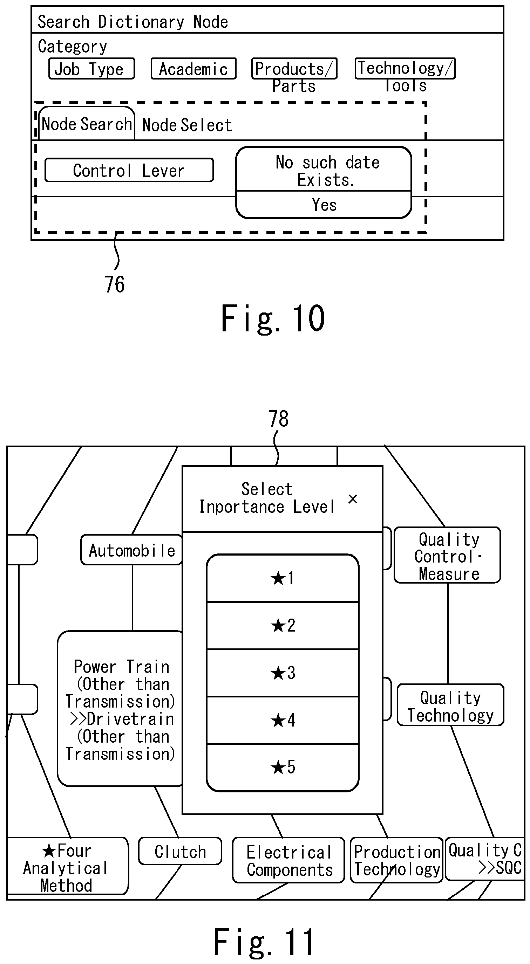

An item that is not registered in the matching dictionary may be required by the person in charge of recruitment in the company. Fig. 10 shows an example of a screen displayed on the monitor of the operation terminal 14 when "Control Lever" that is not included in the matching dictionary is required in the present case relating to "Design of Actuators for Small Outboard Motors".

Specifically, Fig. 10 displays a state in which "Control Lever" is input as a search word, and a comment "No corresponding data Exists." is shown as a search result (76). In this case, the person in charge of operation requests the management server 10 to add a dictionary node that corresponds to "Control Lever" using a chat function (not shown).

During the above processing, the act of searching for "Control Lever" and confirming the result corresponds to the processing of Step 102, Step 104 and Step 114 in the flowchart shown in Fig. 6. In addition, the act of requesting the management server 10 to add "Control Lever" corresponds to Step 118. As shown in Fig. 6, the processing described above is repeatedly performed until registration of all dictionary nodes that correspond to the job offer condition is completed (Step 120). Hereinafter, the dictionary node thus registered is referred to as a "desire node".

In the present embodiment, when a desire node is registered, the importance level of the node can be selected. Fig. 11 shows a state in which a display of "Select Importance Level" (78) is popped up on the monitor of the operation terminal 14. Here, an example in which the importance level can be selected in five levels is shown. Each importance level can be defined, for example, as follows:

5:    Indispensable
4:    Important
3:    Necessary
2:    Helpful
1:    Possibly helpful

Information on a job seeker who desires to be employed can be registered by the operation terminal 14 substantially in the same procedure as the one described above. More specifically, a dictionary node that corresponds to each ability possessed by the job seeker can be registered by the operation terminal 14. The person in charge of operation may conduct an interview with the job seeker and performs this registration based on the result. In addition, the person in charge of operation may perform the above registration based on a resume, personal history, or the like received from the job seeker. Hereinafter, the dictionary node thus registered is referred to as a "possession node". In the present embodiment, when a possession node is registered, the "masterly level" of the possession node may be registered as additional information in the same manner as "the importance level" of the desire node.

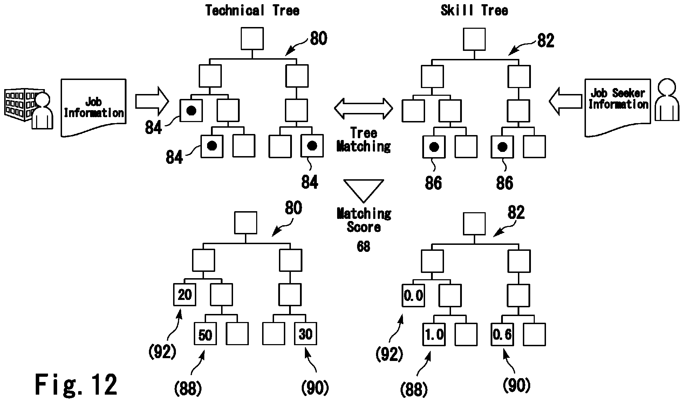

Fig. 12 is a diagram for describing a method of calculating a matching score by comparing a technical tree 80 and a skill tree 82. The technical tree 80 is configured by applying desire nodes 84 registered based on the job offer condition to the tree structure of the matching dictionary. On the other hand, the skill tree 82 is configured by applying possession nodes 86 registered based on the information of the job seeker to the tree structure of the matching dictionary.

In the example shown in Fig. 12, three desire nodes 84 are registered in the technical tree 80. Any one of these desire nodes 84 is registered based on the job offer condition together with the importance level. A point is allocated to each desire node 84 according to its importance level. The technical trees 80 shown in the lower part of Fig. 12 shows an example in which a full score is 100 points, and allocated points of 20, 50, and 30 are respectively given to the desire nodes 84 having the importance levels 2, 5, and 3.

It should be noted that the location of the node in the hierarchy in the technical tree 80 may be reflected in the point allocated to each desire node 84. Specifically, for example, weighting according to the hierarchy may be performed such that a higher allocated point is given to a further superordinate desire node 84. Alternatively, the weighting may be set such that an allocated point of a further subordinate desire node 84 becomes larger.

In the course of calculating the matching score, next, the distance between each of the desire nodes 84 included in the technical tree 80 and each of the possession nodes 86 included in the skill tree 82 is measured. Further, based on the result of the measurement, a coefficient with respect to an allocated point given to each of the desire nodes 84 is determined.

The skill tree 82 shown in the lower part of Fig. 12 shows an example of coefficients with respect to the allocated points set by the above processing. Here, first, for each of the desire nodes 84, it is determined whether the possession node 86 exists at a position of full matching in the tree structure. If the possession node 86 of full matching exists, a coefficient of 1.0 is given to the allocated point of the desire node 84 (see a reference sign 88).

Next, it is determined whether or not the possession node 86 exists at a location linked to the corresponding position of the desire node 84 by a vertical relationship line without mediation of the hierarchy. If the possession node 86 of this type exists, a coefficient of 0.6 is given to the allocated point of the desire node 84 (see a reference sign 90).

Further, it is determined whether or not the possession node 86 exists at a location linked to the corresponding position of the desire node 84 by a vertical relationship line via the hierarchy, or at a location linked to the corresponding position by a horizontal relationship line (see Figs. 4 and 5). If the possession node 86 of this type exists, a coefficient of 0.2 is given to the allocated point of the desire node 84 (not shown).

Then, a coefficient of 0.0 is given to the allocated point of the desire node 84 for which the possession node 86 that satisfies the above relationships does not exist (see a reference sign 92).

Thereafter, the sum of the multiplied values of the allocated point and the coefficients is calculated as the matching score. In the case of the example shown in Fig. 12, the matching score is calculated by the following calculation formula:

$$\text{Matching score} = 20 \times 0.0 + 50 \times 1.0 + 30 \times 0.6 = 68 \text{ points.}$$

It should be noted that in the above example, the coefficients according to the distance are given to the three cases of full matching, no mediation, and mediation or the horizontal relationship line, but the method of imparting coefficients is not limited to this. The distance between the desire node and the possession node may be classified more finely, and more types of coefficients may be introduced.

In addition, in the above example, a masterly level of the possession node 86 is not reflected in the matching score. However, a coefficient according to the masterly level may be introduced to reflect the masterly level in the matching score. In this case, a coefficient closer to 1.0 is set for a possession node having a higher masterly level, and a coefficient closer to 0.0 is set for a possession node having a lower masterly level. Then, by multiplying these coefficients with the allocated point related to the respective possession nodes, the masterly levels can be reflected in the matching score.

In the above method, the job offer condition and the information on the job seeker are combined into a technical tree and a skill tree having the same tree structure with each other. For this reason, according to the present method, it is possible to determine whether or not the desire node matches the possession node by a simple comparison without requiring complicated natural language processing or the like. Further, according to the above method, not only full matching between the desire node and the possession node but also the relevance between the two can be reflected in the matching score. For this reason, according to the present method, it is possible to obtain a matching score that accurately represents a degree of matching between the job offer condition and the information of the job seeker by an easy process.

[Operation specific to first embodiment]

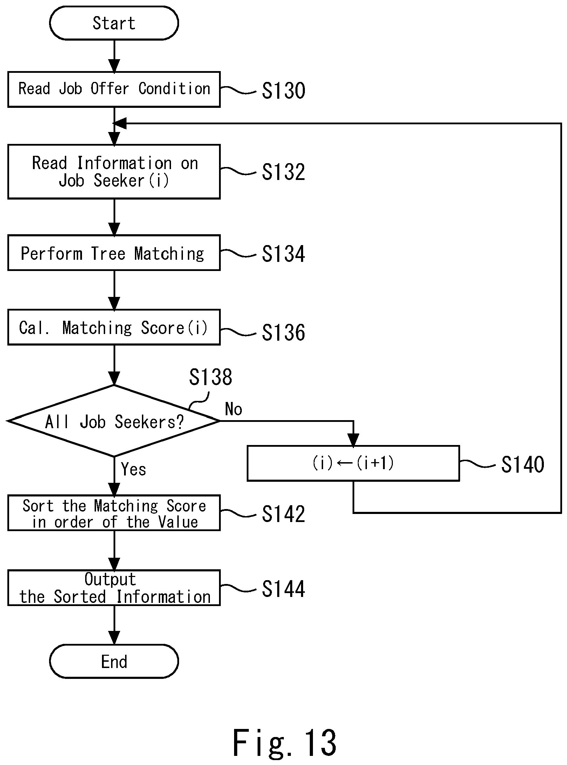

Next, an operation performed by the management server 10 in the present embodiment will be described with reference to Fig. 13. In the present embodiment, a case will be described in which calculation of matching scores for a plurality of job seekers is requested by a company that desires to recruit a human resource.

Fig. 13 is a flowchart for describing a flow of the processing performed by the management server 10 in the present embodiment. Here, it is assumed that prior to the execution of a routine shown in Fig. 13, registration of a desire node corresponding to the job offer condition and registration of possession nodes of all job seekers have been completed by the methods described with reference to Figs. 6 to 11.

The routine shown in Fig. 13 is started by a request being made to the management server 10 for calculation of a matching score. When this routine is started, following an initialization process, the job offer condition is first read (Step 130). More specifically, all desire nodes registered based on the job offer condition are read, and a technical tree including them is generated.

Next, information on a job seeker (i) is read (Step 132). Specifically, all desire nodes registered for the job seeker (i) are read, and a skill tree including them is generated. Here, (i) is one of the numbers sequentially allocated to each of the plurality of job seekers. When the present routine is started, the value of (i) is set to a minimum value (for example, 1) by the initialization process.

Next, tree matching is performed by the method described with reference to Fig. 12 (Step 134). Specifically, in the present step, the following processing is performed:

1. The point to be allocated to the respective desire nodes are calculated based on the respective importance levels so that the total of the allocated point given to all desire nodes becomes a full score (for example, 100 points).

2. The technical tree and the skill tree are compared with each other, and coefficients for the allocated points given to the respective desire nodes based on the distances between the desire nodes and the possession nodes are calculated.

Next, a matching score (i) is calculated by the following processing (Step 136):

1. For all desire nodes included in the technical tree, multiplied values of the given allocated point and the imparted coefficients are calculated.

2. The sum of the above multiplied values is calculated as the matching score (i) of the job seeker (i).

After the above processing is completed, next, it is determined whether or not the processing has been completed for all job seekers (Step 138).

As a result, if it is determined that the processing has not been completed for all job seekers, after (i) is incremented (Step 140), the processing of Step 132 and thereafter is performed again.

On the other hand, if it is determined in the above Step 138 that the processing has been completed for all job seekers, all of the calculated matching scores (i) are sorted in order of the score value (Step 142).

Next, information on the job seekers is output in order of the sorted score (Step 144).

According to the above processing, information on the job seekers is provided in descending order of the matching score, that is, in descending order of the degree of matching with the job offer condition of this time. For this reason, the person in charge of recruitment in the company can select the most appropriate human resource from among a multitude of job seekers simply by picking up the job seeker information in order from the top. As described above, the matching score calculation device of the present embodiment can achieve not only an effect of easily and correctly calculating a matching score between a job offer condition and a job seeker, but also an effect of significantly reducing workload of the person in charge of recruitment in the company.

In the first embodiment described above, information on all job seekers is output after the matching scores are calculated, but the present disclosure is not limited to this. For example, the number of persons to be recruited may be input to the management server in advance, and information on the persons of that number may only be output. According to such a process, the work involved with recruitment can be made further more efficient.

It should be noted that in the first embodiment described above, the element allocated to the dictionary node corresponds to the "matching element" in the first aspect of the disclosure, and the "job seeker" corresponds to the "human resource candidate" in the first aspect of the disclosure.

**Second embodiment**

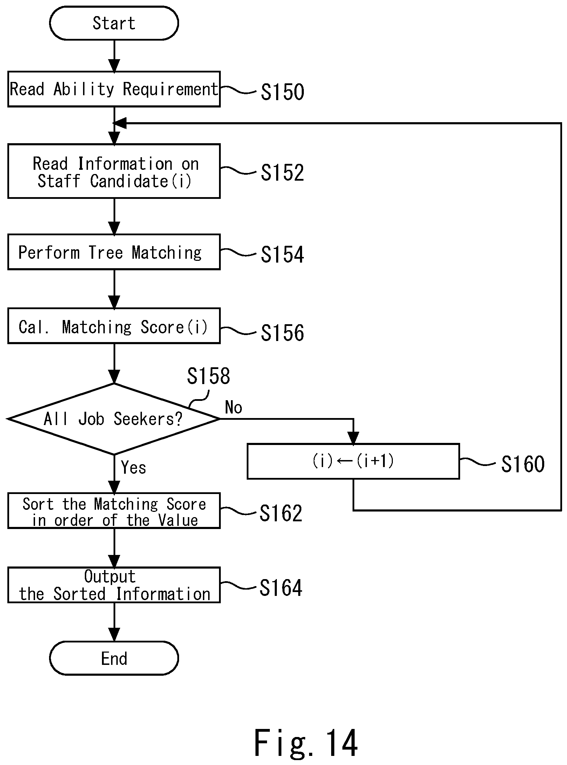

Next, a second embodiment of the present disclosure will be described with reference to Fig. 14. The matching score calculation device of the present embodiment can be implemented with the hardware configuration shown in Fig. 1 as in the case of the first embodiment. The device of the present embodiment has a characteristics in that calculating a matching score as a material for placing the most appropriate human resource in a specific department requiring a human resource.

In the first embodiment described above, the desire node is registered based on the job offer condition, and the possession node is registered based on the information of the job seeker. Contrary to this, in the present embodiment, a desire node is registered based on an ability requirement required for a human resource by a specific department, which requires a human resource to be replenished. In addition, a possession node is registered based on information such as a skill, experience, and educational background possessed by a candidate for staffing in the department.

Fig. 14 is a flowchart for describing a flow of the processing performed by the management server 10 in the present embodiment. As in the case of the first embodiment, it is assumed that prior to the execution of a routine shown in Fig. 14, registration of the desire node of the specific department and registration of possession nodes of all candidates have been completed.

When the routine shown in Fig. 14 is started, following an initialization process, the ability requirement from the specific department requiring a human resource is first read (Step 150). Specifically, all desire nodes registered based on the ability requirement provided by the specific department are read, and a technical tree including them is generated.

Next, information on a staff candidate (i) in the specific department is read (Step 152). Specifically, all possession nodes registered for the staff candidate (i) are read, and a skill tree including them is generated. Here, (i) is one of the numbers sequentially allocated to each of the plurality of candidates as in the case of the first embodiment.

Hereinafter, tree matching (Step 154) and calculation of matching scores (i) (Step 156) are performed for all candidates (Steps 158 and 160). Then, when the calculation is completed, information on the candidates is output in descending order of the matching score (Steps 162 and 164). Since these processes are substantially the same as the processes of Steps 134 to 144 shown in Fig. 13, duplicate description will be omitted here.

According to the above processing, information on the candidates is output in descending order of the matching score. For this reason, a person in charge of staffing in the company can select the most appropriate human resource from among a multitude of candidates simply by picking up the candidate information in order from the top. As described above, the matching score calculation device of the present embodiment can achieve not only an effect of easily and correctly calculating a matching score between a department that requires a human resource and a staff candidate, but also an effect of significantly reducing workload of the person in charge of staffing in the company.

Now, in the second embodiment described above, information on all candidates is output after the matching scores are calculated, but the present disclosure is not limited to this. For example, the number of persons to be placed in the specific department may be input to the management server in advance, and information on the persons of that number may only be output. According to such a process, the work of the person in charge involved with staffing can be made further more efficient.

It should be noted that in the second embodiment described above, the "staff candidate" corresponds to the "human resource candidate" in the first aspect of the disclosure.

**Third embodiment**

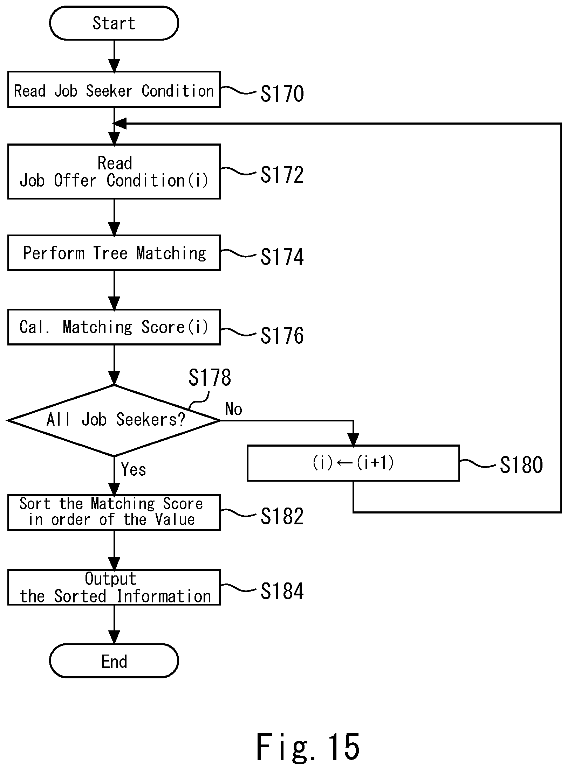

Next, a third embodiment of the present disclosure will be described with reference to Fig. 15. The matching score calculation device of the present embodiment can be implemented with the hardware configuration shown in Fig. 1 as in the case of the first embodiment. The device of the present embodiment has a characteristic in that calculating a matching score as a material for a specific job seeker to select the most appropriate place of employment.

In the present embodiment, as in the case of the first embodiment described above, a desire node is registered based on a job offer condition. In addition, a possession node is registered based on information such as a skill, experience, and educational background possessed by a job seeker.

Fig. 15 is a flowchart for describing a flow of the processing performed by the management server 10 in the present embodiment. In the present embodiment, it is assumed that prior to the execution of a routine shown in Fig. 15, registration of the desire nodes for all of a plurality of job offer conditions and registration of the possession node of the specific job seeker have been completed.

When the routine shown in Fig. 15 is started, following an initialization process, information on the specific job seeker is first read (Step 170). Specifically, all possession nodes registered based on the information provided by the specific job seeker are read, and a skill tree including them is generated.

Next, a job offer condition (i) is read (Step 172). Specifically, all desire nodes registered for the job offer condition (i) are read, and a technical tree including them is generated. Here, (i) is one of the numbers sequentially allocated to each of the plurality of job offer conditions, as in the case of the first or second embodiment.

Hereinafter, tree matching (Step 174) and calculation of matching scores (i) (Step 176) are performed for all job offer conditions (Steps 178 and 180). Then, when the calculation is completed, information on the job offer conditions is output in descending order of the matching score (Steps 182 and 184). Since these processes are substantially the same as the processes of Steps 134 to 144 shown in Fig. 13, duplicate description will be omitted here.

According to the above processing, the job offer information is output in descending order of the matching score. For this reason, the job seeker can efficiently select an offer appropriate to himself/herself from among a multitude of job offers simply by picking up the job offer information in order from the top. As described above, the matching score calculation device of the present embodiment can achieve not only an effect of easily and correctly calculating a matching score between a job seeker and a job offer condition, but also an effect of significantly reducing workload of the job seeker to narrow down application destinations appropriate for himself/herself.

Now, in the third embodiment described above, information on all job offer conditions is output after the matching scores are calculated, but the present disclosure is not limited to this. For example, the number of job offer conditions to be extracted may be input to the management server in advance, and information on the job offers of that number may only be output. According to such a process, the work of the job seeker can be made further more efficient.

It should be noted that in the third embodiment described above, the "job seeker" corresponds to the "human resource candidate" in the first aspect of the disclosure.

**Fourth embodiment**

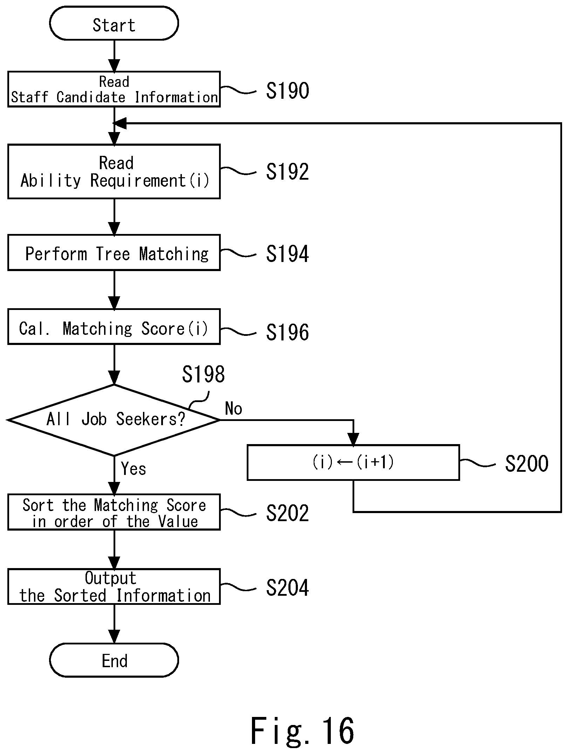

Next, a fourth embodiment of the present disclosure will be described with reference to Fig. 16. The matching score calculation device of the present embodiment can be implemented with the hardware configuration shown in Fig. 1 as in the case of the first embodiment. The device of the present embodiment has a characteristic in that calculating a matching score as a material for staffing a specific human resource to the most appropriate department.

In the present embodiment, as in the case of the second embodiment described above, a desire node is registered based on an ability requirement required by a department that will accept a human resource. In addition, a possession node is registered based on information such as a skill, experience, and educational background possessed by a staff candidate.

Fig. 16 is a flowchart for describing a flow of the processing performed by the management server 10 in the present embodiment. In the present embodiment, it is assumed that prior to the execution of a routine shown in Fig. 16, registration of the desire nodes for all of a plurality of ability requirements and registration of the possession node of the staff candidate have been completed.

When the routine shown in Fig. 16 is started, following an initialization process, information on the staff candidate is first read (Step 190). Specifically, all possession nodes registered based on the information provided by the staff candidate are read, and a skill tree including them is generated.

Next, an ability requirement (i) is read (Step 192). Specifically, all desire nodes registered for the ability requirement (i) of one department are read, and a technical tree including them is generated. Here, (i) is one of the numbers sequentially allocated to each of the plurality of departments that are the recipients of the human resource, as in the cases of the first to third embodiments.

Hereinafter, tree matching (Step 194) and calculation of matching scores (i) (Step 196) are performed for all ability requirements (Steps 198 and 200). Then, when the calculation is completed, information on the departments that set the ability requirement is output in descending order of the matching score (Steps 202 and 204). Since these processes are substantially the same as the processes of Steps 134 to 144 shown in Fig. 13, duplicate description will be omitted here.

According to the above processing, information on the departments is output in descending order of the matching score. For this reason, the staff candidate or the person in charge of staffing who is responsible for determining the destination where the staff candidate is assigned can efficiently select a department that is appropriate to the staff candidate from among a plurality of departments simply by picking up the department information in order from the top. As described above, the matching score calculation device of the present embodiment can achieve not only an effect of easily and correctly calculating a matching score between a staff candidate and each department, but also an effect of significantly reducing workload of the staff candidate to narrow down the most appropriate department to be placed.

In the fourth embodiment described above, information on all departments is output after the matching scores are calculated, but the present disclosure is not limited to this. For example, the number to which the departments are narrowed down may be input to the management server in advance, and information on the departments of that number may only be output. According to such a process, the work for determining a destination where a human resource is assigned can be made further more efficient.

It should be noted that in the fourth embodiment described above, the "staff candidate" corresponds to the "human resource candidate" in the first aspect of the disclosure.


**Fifth Embodiment**

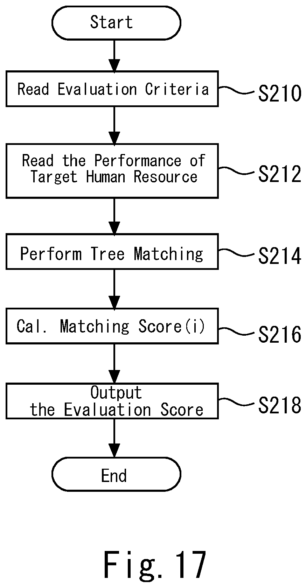

Next, a fifth embodiment of the present disclosure will be described with reference to Fig. 17. The matching score calculation device of the present embodiment can be implemented with the hardware configuration shown in Fig. 1 as in the case of the first embodiment. The device of the present embodiment has a characteristic in that calculating a matching score as a material for personnel evaluation of a human resource to be evaluated.

In the present embodiment, a possession node is registered based on information such as a skill, experience, and achievement possessed by the human resource to be evaluated. On the other hand, a desire node is registered based on the evaluation criteria to be applied to the human resource in the personnel evaluation.

Fig. 17 is a flowchart for describing a flow of the processing performed by the management server 10 in the present embodiment. In the present embodiment, it is assumed that prior to the execution of a routine shown in Fig. 17, registration of the desire node based on the evaluation criteria and registration of the possession node of the human resource candidate subject to the personnel evaluation have been completed.

When the routine shown in Fig. 17 is started, following an initialization process, the evaluation criteria are first read (Step 210). Specifically, all desire nodes registered based on the evaluation criteria to be applied to the human resource to be evaluated are read, and a technical tree including them is generated.

Next, the performance and the like of the human resource to be evaluated are read (Step 212). Specifically, all possession nodes registered based on the performance and the like of the target person are read, and a skill tree including them is generated.

Following the above processing, tree matching (Step 214) and calculation of a matching score (Step 216) are sequentially performed. Since these processes are substantially the same as the processes of Steps 134 and 136 shown in Fig. 13, duplicate description is omitted here.

After the above processing is completed, the calculated matching score is output as an evaluation score (Step 218). The matching score thus calculated is a value that correctly represents to what extent the ability, performance, and the like of the human resource to be evaluated satisfy the evaluation criteria. For this reason, the value can be utilized for the personnel evaluation of the human resource as an objective evaluation result. As described above, according to the matching score calculation device of the present embodiment, the work required for personnel evaluation of a human resource candidate can be made more efficient.

In the first to fifth embodiments described above, the management server 10 and the operation terminals 14 are connected via the network 12, but the configuration of the present disclosure is not limited to this. For example, the function of the operation terminal 14 may be provided in the management server 10, and the management server 10 alone may implement the matching score calculation device.

In addition, in the first to fifth embodiments described above, matching items to be allocated to the respective dictionary nodes are items mainly related to abilities, such as a skill, experience, and educational background, but the content of the matching items is not limited to these. For example, items related to an attitude towards the work, a daily behavioral pattern, and results of the work may be included in the matching items.

**Description of Reference Numerals**

```
10 management server
14 operation terminal
36 matching dictionary
38 dictionary node
40, 42, 44 horizontal relationship line
80 technical tree
82 skill tree
84 desire node
86 possession node
```

**Claims**

1. A matching score calculation device, comprising:

   a memory unit for storing a matching dictionary which has a tree structure including a plurality of dictionary nodes hierarchized in terms of at least one type of relationship from among a superordinate-subordinate relationship of product categories, a relationship between a whole and a part of a product, and a superordinate-subordinate relationship of an abstract concept, and in which a matching element is allocated to each dictionary node;
   an input interface for receiving an input of a dictionary node to be registered; and
   a processing device for calculating a matching score based on the matching dictionary and the registered dictionary node, wherein
   the processing device performs:

   a process of registering a dictionary node in the matching dictionary as a desire node, said dictionary node being required for a human resource;
   a process of applying the desire node to the tree structure to generate a technical tree that covers the registered desire node;
   a process of registering a dictionary node in the matching dictionary as a possession node, said dictionary node being possessed by a human resource candidate;
   a process of applying the possession node to the tree structure to generate a skill tree that covers the registered possession node; and
   a process of calculating the matching score based on whether or not each of the desire nodes included in the technical tree matches each of the possession nodes included in the skill tree, and whether or not a relevance in the tree structure is recognized between the two.

2. The matching score calculation device according to claim 1, wherein:

   the matching dictionary further includes information indicating at least one type of horizontal relationship among a horizontal relationship that associates one matching element with another matching element that is used to handle said one matching element, a horizontal relationship that associates one matching element with another matching element that is required to handle said one matching element, and a horizontal relationship that associates one matching element with another matching element that is similar to said one matching element; and
   the process of calculating the matching score includes a process of reflecting in the matching score whether or not the horizontal relationship is recognized between each of the desire nodes included in the technical tree and each of the possession nodes included in the skill tree.

3. The matching score calculation device according to claim 1 or 2, wherein:

   the input interface has a function of receiving an input of an importance level of the desire node; and
   the process of calculating the matching score includes:

a process of calculating an allocated point for each of the desire nodes included in the technical tree based on the importance level;
a process of calculating a score for each of the desire nodes based on the allocated point; and,
a process of setting a sum of the scores of the respective desire nodes as the matching score.

4. The matching score calculation device according to any one of claims 1 to 3, wherein
the input interface has a function of receiving an input of a masterly level of the possession node, and
the process of calculating the matching score includes a process of reflecting in the matching score the masterly level of each of the possession nodes included in the skill tree.

5. The matching score calculation device according to any one of claims 1 to 4, wherein
the desire node corresponds to each element included in a job offer condition required for a human resource to be recruited,
the possession node corresponds to each element possessed by a human resource candidate who seeks a job, and
the matching score corresponds to a degree of matching between the job offer condition and the human resource candidate.

6. The matching score calculation device according to claim 5, wherein
the processing device repeatedly performs a process of calculating a matching score so that the matching score with each of a plurality of human resource candidates is calculated for one job offer condition, and further performs:

a process of sorting a plurality of calculated matching scores in order of the score; and
a process of outputting information on one or more human resource candidates in order of the score from the highest matching score.

7. The matching score calculation device according to claim 5, wherein the processing device repeatedly performs a process of calculating a matching score so that the matching score with each of a plurality of job offer conditions is calculated for one human resource candidate, and further performs:

a process of sorting a plurality of calculated matching scores in order of the score; and
a process of outputting information on one or more job offer conditions in order of the score from the highest matching score.

8. The matching score calculation device according to any one of claims 1 to 4, wherein
the desire node corresponds to each element included in an ability requirement required for a human resource to be replenished,
the possession node corresponds to each element possessed by a human resource candidate who is a staff candidate, and
the matching score corresponds to a degree of matching between the ability requirement and the human resource candidate.

9. The matching score calculation device according to claim 8, wherein
the processing device repeatedly performs a process of calculating a matching score so that the matching score with each of a plurality of human resource candidates is calculated for one ability requirement, and further performs:

a process of sorting a plurality of calculated matching scores in order of the score; and
a process of outputting information on one or more human resource candidates in order of the score from the highest matching score.

10. The matching score calculation device according to claim 8, wherein
the processing device repeatedly performs a process of calculating a matching score so that the matching score with each of a plurality of ability requirements is calculated for one human resource candidate, and further performs:

a process of sorting a plurality of calculated matching scores in order of the score; and
a process of outputting information on one or more ability conditions in order of the score from the highest matching score.

11. The matching score calculation device according to any one of claims 1 to 4, wherein

the desire node corresponds to each element included in evaluation criteria to be applied to a human resource to be evaluated,
the possession node corresponds to each element possessed by the human resource whose performance should be evaluated, and
the matching score corresponds to an evaluation result of the human resource to be evaluated.

# Fig. 1

# Fig. 2

Fig. 3

38

Motercycle

38

Designing
Tools

40

Drive
Mechanism  use →  CAD

Clutch

Transmission
≫
Transmission  40

use

Starting
Mechanism

require

42

Friction

## Fig. 4

38

Products/
Parts  38

38

Industrial
Equipment

Automobile
-related

Measuring
Instruments

Measuring
Instruments

similar

Caliper  44  Caliper

## Fig. 5

S100

Start → | Products/Parts | Tecnology/Tools | Job Type | Academic |

Search
·Word Search
·Node Select  S102

S104

Exist in The Relavant Field?  — No → S114

Yes

**Node Registlation**  S106

S108

Registration

Check Surrouding Tree

S112  Yes

Term to be Registered ?  — Yes — Vert/Hori Relation Line? S110

No  No

S114

Exist in Other Field ?  — No →

Yes

**Node Registlation**  S116

S108

Registration

Check Surrouding Tree

S112  Yes

Term to be Registered ?  — Yes — Vert/Hori Relation Line? S110

No  No

S118

Request Dictionary Node

Registration by Administrator

S120

All Nodes Registered ?  — No →

Yes

End

# Fig. 6

| Engineering Department •••• | | Score Ranking | |
|---|---|---|---|
| JOB NO | | 10225310 | |
| Employmemt Reriod | 2017/01/01 ▽ | ~ | 2017/03/31 |
| Content of Job | | Design of Actuators for Small Outboard Motors | |

46

**Search Dictionary Nodes**

Category

48 ─ [ ✓Job Type ]   [ Academic ]   [

Nodes

Word Search | Node Selection ─ 50

54

| Planning/ Research | CAE Analysis |
|---|---|
| Design/ Development | Verification |
| Experiment/ Evaliation | Software Development |
| Production Technology | Construction/ Plant Design |
| Production | Shipbuilding Design |
| Production Management | Formulation Design |

52

56

Fig. 7

---

**Search Dictionary Nodes**

Category

| Job Type | Academic | Products/Parts | Technology/Tools |

Nodes

58 — | Word Search | Node Selection |

60 — | Actuator |

| Search |

---

There are more than one, please select one

Products, Parts/Technology, Tools

| Automobile-related | Transport Machinery | Industrial Machinery |
| Home Appliance/Audio Visual | Precision Instrument | Electronic Component |
| Electronic Equipment | Information Communication | Information Service |

| Job Type |
| Academic |
| ✓ All |

62

10/10 cases

| Produce Parts | < | Automobile-related | < Automobile < | Engine Intake Exhaust System Parts | < Supercharger < Turbocharger < Actuator |
| Produce Parts | < | Automobile-related | < Automobile < | Electronics, Electrical Components | < Sensor/Actuator |
| Produce Parts | < | Automobile-related | < Automobile < | Electronics, Electrical Components | < Sensor/Actuator < Actuator |
| Produce Parts | < | Automobile-related | < Motorcycle < | Electronics, Electrical Components | < Sensor/Actuator |
| Produce Parts | < | Automobile-related | < Motorcycle < | Electronics, Electrical Components | < Sensor/Actuator < Actuator |
| Produce Parts | < | Industrial Machinery | < Manufacturing Facility < | Other Production Machinery | < Industrial Robot < Actuator Type Robot |
| Produce Parts | < | Industrial Machinery | < Other Industrial Machinery < | Machine Component | < Pneumatic Equipment < Actuator |

64

Fig. 8

Electronic Electorical Components

Sensor/Actuator
>>Actuator
>>Actuator
>>Sensor

66

Sensor
>>Sensor

Actuator
>>Actuator

ECU
>>Engine·
Control Unit

Other Sensor/Actuator
>>Other Sensor/Actuator

Solenoid
>>Valve

Solenoid
Valve

68

Automobile-related

Automobile

Motorcycle

Power Train
(Otherthan
Transmission)
>>Drivetrain
(Other than
Transmission)

Steering/
Suspension

Road Wheel
/Tire

Axle/
Brake/Vehicle
Dynamic
Control

Climate
Control

Driving
Support&
Security

70

70    72

Engine
Lubrication
Cooling

Engin
Electrical
Equipment
ContorolPart

Trans
mission
Parts

Power_Train
(Otherthan
Transmission)
>>Drivetrain
(Other than
Transmission)

Steering/
Suspension

Road Wheel
/Tire

Axle/
Brake/Vehicle
Dynamic
Control

Chassis
System
Module

SteeringGroup
>>Steering
>>Steering Gear

Suspension
Group

Suspension
Control

74

Electric
Power
Steering
>>EPS

Shock
Absorbing
Steering

Tilt
Steering

4WS
>>Four Wheel
Steering

Steering
Gear

Steering
Linkage

Steering
Column
>>Changing Post

Fig. 9

23

Search Dictionary Node

Category

| Job Type | | Academic | | Products/ Parts | | Technology/ Tools |

Node Search | Node Select

Control Lever

No such date Exists.

Yes

76

Fig. 10

78

Select Inportance Level ×

Automobile

Quality Control· Measure

★1

★2

Power Train (Other than Transmission) >>Drivetrain (Other than Transmission)

★3

★4

Quality Technology

★5

★Four Analytical Method

Clutch

Electrical Components

Production Technology

Quality C >>SQC

Fig. 11

Fig. 12

```
                      ┌─────────────┐
                      │    Start    │
                      └─────────────┘
                             │
                             ▼
              ┌──────────────────────────┐
              │ Read Job Offer Condition │──── S130
              └──────────────────────────┘
                             │
                             ▼  ◄──────────────────────────────┐
              ┌──────────────────────────┐                     │
              │    Read Information on    │──── S132            │
              │       Job Seeker(i)       │                     │
              └──────────────────────────┘                     │
                             │                                 │
                             ▼                                 │
              ┌──────────────────────────┐                     │
              │   Perform Tree Matching   │──── S134            │
              └──────────────────────────┘                     │
                             │                                 │
                             ▼                                 │
              ┌──────────────────────────┐                     │
              │  Cal. Matching Score(i)   │──── S136            │
              └──────────────────────────┘                     │
                             │                                 │
                           S138                                │
                             ▼                                 │
                        ╱─────────╲          No                │
                       ╱ All Job    ╲──────────────┐           │
                       ╲ Seekers?   ╱              │           │
                        ╲─────────╱                ▼           │
                            │ Yes       ┌──────────────────┐   │
                            ▼           │   (i) ← (i+1)     │── S140
              ┌──────────────────────┐  └──────────────────┘   │
              │  Sort the Matching   │── S142      │           │
              │ Score in order of    │             └───────────┘
              │     the Value        │
              └──────────────────────┘
                            │
                            ▼
              ┌──────────────────────┐
              │       Output         │── S144
              │ the Sorted Information│
              └──────────────────────┘
                            │
                            ▼
                      ┌─────────────┐
                      │     End     │
                      └─────────────┘
```

Fig. 13

Start

Read Ability Requirement — S150

Read Information on
Staff Candidate(i) — S152

Perform Tree Matching — S154

Cal. Matching Score(i) — S156

S158
All Job Seekers? —No→ (i)←(i+1) — S160

Yes

Sort the Matching Score
in order of the Value — S162

Output
the Sorted Information — S164

End

F i g. 14

```
                    ┌─────────────┐
                    │    Start    │
                    └──────┬──────┘
                           ▼
            ┌──────────────────────────┐
            │ Read Job Seeker Condition │──── S170
            └──────────────┬───────────┘
                           ▼
            ┌──────────────────────────┐
            │          Read            │──── S172
            │  Job Offer Condition(i)  │
            └──────────────┬───────────┘
                           ▼
            ┌──────────────────────────┐
            │  Perform Tree Matching   │──── S174
            └──────────────┬───────────┘
                           ▼
            ┌──────────────────────────┐
            │  Cal. Matching Score(i)  │──── S176
            └──────────────┬───────────┘
                           ▼           S178
                     ◇─────────────◇
                    ◇  All Job      ◇  No
                    ◇  Seekers?     ◇─────────┐
                     ◇─────────────◇          ▼
                           │ Yes      ┌──────────────┐
                           │          │  (i)←(i+1)   │──── S180
                           ▼          └──────────────┘
            ┌──────────────────────────┐
            │  Sort the Matching Score │──── S182
            │    in order of the Value │
            └──────────────┬───────────┘
                           ▼
            ┌──────────────────────────┐
            │          Output          │──── S184
            │  the Sorted Information   │
            └──────────────┬───────────┘
                           ▼
                    ┌─────────────┐
                    │     End     │
                    └─────────────┘
```

Fig. 15

```
                    ┌─────────────┐
                    │    Start    │
                    └──────┬──────┘
                           │
                           ▼
              ┌────────────────────────┐
              │          Read          │ ── S190
              │ Staff Candidate Information │
              └────────────┬───────────┘
                           │◄──────────────────────────┐
                           ▼                            │
              ┌────────────────────────┐                │
              │          Read          │ ── S192        │
              │  Ability Requirement(i) │                │
              └────────────┬───────────┘                │
                           ▼                            │
              ┌────────────────────────┐                │
              │  Perform Tree Matching  │ ── S194        │
              └────────────┬───────────┘                │
                           ▼                            │
              ┌────────────────────────┐                │
              │  Cal. Matching Score(i) │ ── S196        │
              └────────────┬───────────┘                │
                           │      S198                  │
                           ▼                            │
                      ◇──────────◇   No                 │
                 ◇  All Job Seekers?  ◇─────────┐        │
                      ◇──────────◇            │        │
                           │ Yes              ▼        │
                           │         ┌────────────────┐│
                           │         │  (i)←(i+1)     ││── S200
                           │         └────────────────┘│
                           ▼                           │
              ┌────────────────────────┐   └───────────┘
              │  Sort the Matching Score │ ── S202
              │    in order of the Value │
              └────────────┬───────────┘
                           ▼
              ┌────────────────────────┐
              │         Output         │ ── S204
              │  the Sorted Information  │
              └────────────┬───────────┘
                           ▼
                    ┌─────────────┐
                    │     End     │
                    └─────────────┘
```

Fig. 16

```
              ┌─────────────┐
              │    Start    │
              └──────┬──────┘
                     │
                     ▼
         ┌──────────────────────┐
         │ Read Evaluation Criteria │───S210
         └──────────┬───────────┘
                    │
                    ▼
         ┌──────────────────────┐
         │ Read the Performance of │───S212
         │  Target Human Resource  │
         └──────────┬───────────┘
                    │
                    ▼
         ┌──────────────────────┐
         │  Perform Tree Matching │───S214
         └──────────┬───────────┘
                    │
                    ▼
         ┌──────────────────────┐
         │ Cal. Matching Score(i) │───S216
         └──────────┬───────────┘
                    │
                    ▼
         ┌──────────────────────┐
         │        Output         │───S218
         │ the Evaluation Score  │
         └──────────┬───────────┘
                    │
                    ▼
              ┌─────────────┐
              │     End     │
              └─────────────┘
```

Fig. 17

**INTERNATIONAL SEARCH REPORT**

| International application No. |
| --- |
| PCT/JP2018/024042 |

### A. CLASSIFICATION OF SUBJECT MATTER
Int.Cl. G06Q50/10(2012.01)i

According to International Patent Classification (IPC) or to both national classification and IPC

### B. FIELDS SEARCHED

Minimum documentation searched (classification system followed by classification symbols)
Int.Cl. G06Q10/00-G06Q99/00

Documentation searched other than minimum documentation to the extent that such documents are included in the fields searched
| | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2009-075690 A (HUMAN CREATE JAPAN KK) 09 April 2009, paragraphs [0014]-[0053], fig. 1-3, 5 (Family: none) | 1-11 |
| A | JP 2015-164022 A (NEC CORPORATION) 10 September 2015, entire text, all drawings & US 2015/0248650 A1, entire text, all drawings | 1-11 |

☒ Further documents are listed in the continuation of Box C.    ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 13.09.2018 | 25.09.2018 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2018/024042

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2012-510654 A (TELEFONAKTIEBOLAGET L M ERICSSON) 10 May 2012, entire text, all drawings & US 2011/0238694 A1, entire text, all drawings & WO 2010/063311 A1 & EP 2370911 A1 & CN 102227725 A | 1-11 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003162651 A